(19) Europäisches Patentamt
European Patent Office
Office européen des brevets

(11) Veröffentlichungsnummer: **0 406 603 A2**

# (12) EUROPÄISCHE PATENTANMELDUNG

(21) Anmeldenummer: **90111387.8**

(22) Anmeldetag: **16.06.90**

(51) Int. Cl.[5] **C08L 23/16**, C08L 23/22, C08L 15/00, C08K 5/5398, C08K 5/39, C08K 5/47

(30) Priorität: **01.07.89 DE 3921742**
**26.04.90 DE 4013336**

(43) Veröffentlichungstag der Anmeldung:
**09.01.91 Patentblatt 91/02**

(84) Benannte Vertragsstaaten:
**DE FR GB IT**

(71) Anmelder: **BAYER AG**

**D-5090 Leverkusen 1 Bayerwerk(DE)**

(72) Erfinder: **Engels, Wilhelm, Dr.**
**Dickeicherfeld 12**
**D-5014 Kerpen 3(DE)**
Erfinder: **Eholzer, Ulrich, Dr.**
**Gerstenkamp 10**
**D-5000 Koeln 80(DE)**
Erfinder: **Kempermann, Theo, Dr.**
**Friedrich-Schmidt-Strasse 16a**
**D-5000 Koeln 41(DE)**
Erfinder: **Schubart, Rüdiger, Dr.**
**An der Engelsfuhr 27**
**D-5060 Bergisch-Gladbach(DE)**
Erfinder: **Abele, Manfred**
**Am Boerschsgarten 16**
**D-5000 Koeln 90(DE)**

## (54) Nitrosamin-frei vulkanisierbare Kautschukmassen.

(57) Schwefel-Vulkanisiersysteme, enthaltend Di-$C_1$-$C_6$-alkoxythiophosphoryltrisulfid und (gegebenenfalls substituiertes) Zink-dibenzyldithiocarbamat, Dibenzyldithiocarbamidsäuredisulfid und/oder N-Hydroxyethylammoniumbenzthiazol-2-mercaptid, sind Standardsystemen in Bezug auf Vulkanisationszeit und Eigenschaften der erhaltenen Vulkanisate gleichwertig, aber im Hinblick auf etwa entstehende Nitrosamine überlegen.

EP 0 406 603 A2

## NITROSAMIN-FREI VULKANISIERBARE KAUTSCHUKMASSEN

Die Erfindung betrifft in Gegenwart von Schwefel Nitrosamin-frei vulkanisierbare Massen auf Basis von C=C-doppelbindungsarmem Kautschuk, ein Verfahren zur Herstellung dieser Kautschukmassen durch Mischen der Komponenten und die Verwendung dieser Kautschukmassen zur Herstellung von Vulkanisaten.

Das wichtigste Vulkanisiermittel für Kautschuke ist Schwefel, sei es als elementarer Schwefel oder in Form eines Schwefelspenders. Die heute verwendeten Vulkanisiersysteme enthalten darüber hinaus Vulkanisationsbeschleuniger und gegebenenfalls Zweitbeschleuniger, gegebenenfalls Aktivatoren und gegebenenfalls Vulkanisationsverzögerer.

Als Vulkanisationsbeschleuniger werden bekanntlich Substanzen bezeichnet, die die Vulkanisationszeit verkürzen oder eine Vulkanisation bei niedrigerer Temperatur ermöglichen; vgl. Ullmanns Ecyclopädie der technischen Chemie, 3. Aufl., Urban & Schwarzenberg, München-Berlin 1957, S. 383 ff.

Zur Entfaltung der vollen Wirksamkeit der Vulkanisationsbeschleuniger werden gegebenenfalls Zweitbeschleuniger mitverwendet.

Für die Schwefelvulkanisation werden häufig sogenannte "EV-Systeme" ("EV" = efficient vulcanization) eingesetzt, wobei man als Vulkanisationsbeschleuniger zumeist Thiuramverbindungen wie Tetraalkylthiurammonosulfide (z.B. Tetramethylthiurammonosulfid), Tetraalkylthiuramtetrasulfide (z.B. Tetramethylthiuramtetrasulfid) und vorzugsweise Tetraalkylthiuramdisulfide (z.B. Tetramethylthiuramdisulfid, nachfolgend: "TMTD") verwendet. Wegen ihrer ausgezeichneten Wirkung werden diese Thiuramverbindungen auch als Ultrabeschleuniger bezeichnet.

Bei der Vulkanisation in Gegenwart von Thiuramverbindungen entsteht in geringer Menge Dimethylamin als Zerfallsprodukt, das unter ungünstigen Umständen zum unerwünschten (weil cancerogenen) N-Nitrosodimethylamin nitrosiert werden kann (Kautschuk - Gummi - Kunststoffe 1987 , 32).

Auf der anderen Seite sind beschleunigende Zusätze bei der Schwefelvulkanisation - besonders von relativ langsam vulkanisierenden C=C-doppelbindungsarmen Kautschuken, wie z.B. EPDM - unverzichtbar Die wünschenswerte Vulkanisationsgeschwindigkeit orientiert sich dabei an Standardsystemen, wie sie etwa in Internat. Polym Sci. Technol. 7 , (1977), 85 beschrieben sind. Ein derartiges Vulkanisiersystem besteht beispielsweise aus

1.5 bis 2.0 phr Schwefel,
1.5 phr TMTD und
0.5 phr 2-Mercaptobenzothiazol (MBT)
phr = p arts by weight per h undred parts by weight of r ubber

Bei der Suche nach einem neuen Vulkanisiersystem war außerdem die Beschränkung durch das bei höheren Dosiermengen auftretende Ausblühen zu beachten (vergl. W. Hofmann in Gummi-Asbest-Kunststoffe 9 (1986), S. 422 ff ). Folge des Ausblühens ist eine unerwünschte Belagbildung auf dem Vulkanisat.

Überraschenderweise wurde nun gefunden, daß die Aufgabe der Erfindung durch ein System aus

(I) Schwefel

(II) Di-$C_1$-$C_6$-alkoxythiophosporyltrisulfid (nachfolgend: "PS-3") der Formel

$$(RO)_2\underset{\underset{S}{\|}}{P}-S_3-\underset{\underset{S}{\|}}{P}(OR)_2$$

worin OR für Alkoxy, vorzugsweise für Methoxy, Ethoxy, n- und iso-Propoxy, n-, sek.- und iso-Butoxy, n-Hexoxy, Cyclohexoxy steht (die wichtigste Bedeutung ist Ethoxy), und

(III) mindestens einer Verbindung aus der Reihe bestehend aus

1)

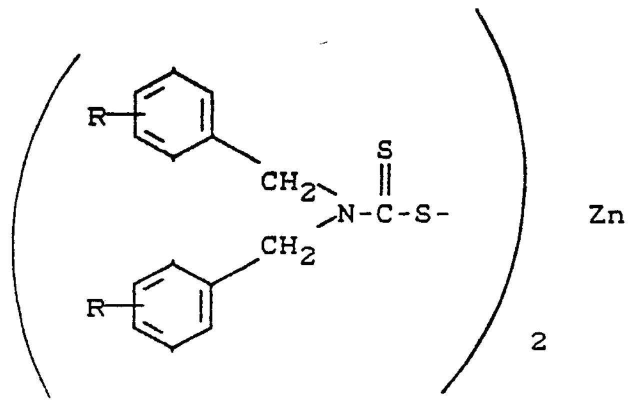

2)

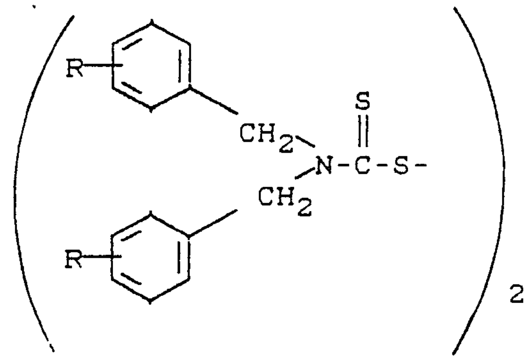

3) N-Hydroxyethylammonium-benzthiazol-2-mercaptid der Formel

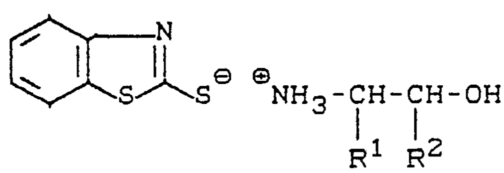

gelöst wird, worin

R, $R^1$ und $R^2$ unabhängig voneinander Wasserstoff, $C_1$-$C_3$-Alkyl (vorzugsweise Methyl) und Phenyl bedeuten. Die Verbindungen (1) bzw. (2) mit R = Wasserstoff und die Verbindungen (3) mit $R^1 = R^2 = H$ sind bevorzugt (nachfolgend: "MBTA").

Gegenstand der Erfindung sind also vulkanisierbare Massen auf Basis von C = C-doppelbindungsarmem Kautschuk, enthaltend jeweils pro 100 Gewichtsteile Kautschuk,

(I) 1 bis 2 Gewichtsteile Schwefel,

(II) 1 bis 5 Gewichtsteile PS-3 und

(III) 0,5 bis 5 Gewichtsteile Verbindung (1), (2) und/oder (3).

C = C-doppelbindungsarme Kautschuke im Sinne der Erfindung umfassen solche mit Iodzahlen von 2 bis 35, vorzugsweise von 3 bis 30, insbesondere von 5 bis 25. Die Bestimmung der Iodzahlen erfolgt im allgemeinen durch Addition von Iodchlorid in Eisessig nach Wijs, DIN 53 241, Teil 1. Die Iodzahl definiert die Iodmenge in Gramm, die von 100 g Substanz chemisch gebunden wird. Beispiele für bevorzugte Kautschuke sind Butylkautschuk, hydrierter Nitrilkautschuk und vorzugsweise EPDM.

Die Kautschuke besitzen vorzugsweise Glasübergangstemperaturen unter 0 °C, insbesondere unter -10 °C.

Der Ausdruck "EPDM" steht für Ethylen/Propylen/Dien-Terpolymerisate. EPDMs umfassen Kautschuke, in denen das Gewichtsverhältnis von Ethylen- zu Propylenresten im Bereich von 40:60 bis 65:35 liegt und die 1 bis 20 C = C- Doppelbindungen/1.000 C-Atome aufweisen können. Als geeignete Dien-Monomere im EPDM seien beispielsweise genannt: konjugierte Diene, z.B. Isopren und Budadien-1,3, und nichtkonjugierte Diene mit 5 bis 25 C-Atomen, z.B. 1,4-Pentadien, 1,4-Hexadien, 1,5-Hexadien, 2,5-Dimethyl-1,5-hexadien und 1,4-Octadien; cyclische Diene, z.B. Cyclopentadien, Cyclohexadien, Cyclooctadien und Dicyclopentadien; Alkyliden- und Alkenylnorbornene, z.B. 5-Ethyliden-2-norbornen, 5-Butyliden-2-norbornen, 2-Methallyl-5-norbornen, 2-Isopropenyl-5-norbornen und Tricyclo-diene.

Bevorzugt sind die nichtkonjugierten Diene Hexadien-1,5, Ethyliden-norbornen und Dicyclopentadien. Der Diengehalt im EPDM beträgt vorzugsweise 0,5 bis 10 Gew.-%, bezogen auf EPDM.

Derartige EPDM-Kautschuke sind z.B. in der DE-OS 2 808 709 beschrieben.

Der Begriff "Butylkautschuk" im Sinne der Erfindung umfaßt Isobuten-Copolymerisate aus 95 bis 99,5, vorzugsweise 97,5 bis 99,5, Gew.-% Isobuten und 0,5 bis 5, vorzugsweise 0,5 bis 2,5, Gew.% copolymerisierbarem Dien, wie z.B. Butadien, Dimethylbutadien, Pentadien-1,3, insbesondere Isopren.

Butylkautschuk wird in großtechnischem Maßstab fast ausschließlich als Isobuten/Isopren-Copolymerisat durch kationische Lösungspolymerisation bei niedriger Temperatur hergestellt; vgl. z.B. Kirk-Othmer, Encyclopedia of Chemical Technology, 2nd ed., Bd. 7, S 688, Interscience Publ., New York-London-Sydney 1965 und Winnacker-Küchler, Chemische Technologie, 4. Aufl., Bd. 6, S. 550-555, Carl Hanser Verlag, München-Wien 1962.

Den bevorzugten hydrierten Nitrilkautschuken liegen Butadien/Acrylnitril-Copolymerisate mit einem Gehalt an copolymerisiertem Acrylnitril von 5 bis 60, vorzugsweise 10bis 50, Gew.-% zugrunde. "Hydriert" bedeutet in diesem Zusammenhang, daß 90 bis 98,5, vorzugsweise 95 bis 98, % der hydrierbaren C=C-Doppelbindungen hydriert sind. Der Hydriergrad kann IR-spektroskopisch bestimmt werden.

Die Hydrierung von Nitrilkautschuk ist bekannt; US-PS 3 700 637, DE-OS 25 39 132, 30 46 008, 30 46 251, 32 27 650, 33 29 974, EP-A 111 412, FR-PS 2 540 503. Hydrierter Nitrilkautschuk zeichnet sich vor allem durch vergleichsweise hohe Stabilität gegen Oxidation aus.

Die für das erfindungsgemäße Verfahren geeigneten Kautschuke besitzen in der Regel Mooney-Viskositäten (DIN 53 523) von 10 bis 150, vorzugsweise von 25 bis 80 (ML 1+4)/100 °C.

PS-3 und seine Verwendung als Schwefelspender bzw. als Ultrabeschleuniger bei der Kautschukvulkanisation - auch für EPDM - sind bekannt (DE-OS 19 36 694 und 22 49 090, GB-PS 1 342 889).

Die Herstellung dieser Verbindungen kann nach dieser Literatur durch Umsetzung von Dialkyldithiophosphorsäure mit Schwefeldichlorid ($SCl_2$, Dichlorsulfan), gegebenenfalls in Gegenwart einer Base wie Natriumhydroxid, gegebenenfalls in einem organischen Lösungsmittel, erfolgen.

Die Mitverwendung von Verbindungen der Formeln (1), (2) und/oder (3) wird in den genannten Druckschriften weder offenbart noch nahegelegt.

Die Verbindungen der Formeln (1) und (2) sind mindestens teilweise bekannt, Sie können nach den in Ullmann's Encyclopedia of Industrial Chemistry, Vol. A9, VCH Verlagsgesellschaft, Weinheim 1987, S. 1 f. und in den dort zitierten Literaturstellen beschriebenen Verfahren oder nach analogen Verfahren hergestellt werden. Teilweise sind diese Verbindungen auch im Handel erhältlich.

MBTA und seine Verwendung als Vulkanisationsbeschleuniger für Naturkautschuk sind bekannt; vgl. Epshtein, L.E. Vinitskii, B.L. Babitskii, Jzvest. Vysshikh Ucheb. Zavedenii, Khim. i Khim. Tekhnol., 4 , 872 (1961); B.L. Babitskii, L.E. Vinitskii, V.G. Epshtein, Tr. Vseros. Nauchn. - Issled. Khim. Jnst. Prom. Mestn. Podchineniya 1960 , No. 10, 116. Die Herstellung kann durch Umsetzung von 2-Mercaptobenzthiazol mit Ethanolamin erfolgen. Neben MBTA wird die Mitverwendung von Zweitbeschleunigern, wie z.B., Diphenylguanidin, empfohlen; die Verwendung von PS-3 oder ähnlichen Verbindungen wird weder empfohlen noch angeregt.

Ein Schwefel-Vulkanisiersystem, enthaltend eine Kombination von PS-3 und Verbindung (3) und seine Verwendung bei der Vulkanisation C=C-doppelbindungsarmer Kautschuke war also weder durch eine der genannten Literaturstellen noch durch eine Kombination dieser Literaturstellen nahegelegt.

Die Herstellung von Verbindungen (3), in denen $R^1$ und/oder $R^2$ nicht Wasserstoff bedeuten, kann in analoger Weise durch Umsetzung von 2-Mercaptobenzthiazol mit dem entsprechend substituierten Ethanolamin $NH_2$-$CHR^1$-$CHR^2$-0H erfolgen.

Den C=C-doppelbindungsarmen Kautschuken kann man vor der Vulkanisation Vulkanisationshilfsmittel und - je nach Bedarf - Aktivatoren, Füllstoffe wie z.B. Ruß, Weichmacher, Alterungsschutzmittel und/oder Verarbeitungshilfsmittel in üblichen Mengen zusetzen.

Die bedeutendsten anorganischen Aktivatoren sind die Metalloxide, insbesondere Zinkoxid. In einzelnen Fällen wird auch Magnesiumoxid oder Calciumhydroxid verwendet.

Als Verarbeitungshilfsmittel kommen beispielsweise Fettsäuren, wie z.B. Stearinsäure, in Frage.

Das Mischen der Komponenten kann auf üblichen Mischaggregaten erfolgen.

Bevorzugte Mischaggregate sind die in der Kautschukindustrie üblichen Kneter, Walzen, Innenmischer und Mischextruder, die in der Regel mit Scherraten von 1 bis 1000 $sec^{-1}$, vorzugsweise 1 bis 200 $sec^{-1}$ arbeiten.

Weiterer Gegenstand der Erfindung ist also ein Verfahren zur Herstellung der beschriebenen Kautschukmassen durch Mischen der Komponenten.

Die Vulkanisation kann bei Temperaturen von 100 bis 200 °C, vorzugsweise 130 bis 180 °C, gegebenenfalls unter einem Druck von 10 bis 200 bar, erfolgen.

Die hervorragenden Vulkanisateigenschaften werden in der Regel schon ohne Temperung erreicht, lassen sich aber durch Tempern oft noch verbessern.

Weiterer Gegenstand der Erfindung ist die Verwendung der beschriebenen Kautschukmassen zur Herstellung von Vulkanisaten.

Die erfindungsgemäß erhältlichen Vulkanisate sind hervorragend geeignet als Fensterrahmenprofile und als Schläuche und andere Formkörper im Motorraum von Kraftfahrzeugen.

Beispiel 1

In einem Innenmischer wurde mit folgenden Bestandteilen eine Kautschukmischung ("EPDM-Batch") hergestellt:

| | Gewichtsteile |
|---|---|
| EPDM, ®Buna AP 451[1)] | 50,0 |
| EPDM, ®Buna SP 447[1)] | 50,0 |
| Ruß N 539 | 110,0 |
| paraffinisches Mineralöl[2)] | 70,0 |
| Faktis[3)] | 20,0 |
| Stearinsäure | 1,0 |
| IPPD[4)] | 1,0 |
| Zinkoxid[5)] | 5,0 |

1) Hersteller: Hüls AG, Marl
2) ®Ingraplast SRL der Fa. Fuchs AG, Mannheim
3) Faktis Badenia C der Fa. Rhein-Chemie Rheinau, Mannheim
4) N-Isopropyl-N′-phenyl-p-phenylendiamin, ®Vulkanox 4010 NA der Bayer AG
5) ®Zinkoxyd aktiv der Fa. Bayer AG

Auf einem Walzwerk wurden pro 307 Gew.-Teile EPDM-Batch die in Tabelle 1 angegebenen Zusätze nachgemischt.

Als Verbindung (1) wurde

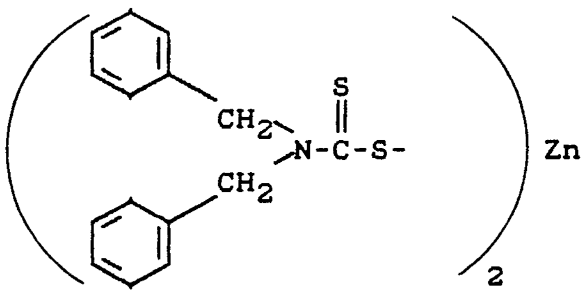

Zink-dibenzyldithiocarbamat (nachfolgend abgekürzt: "ZDBEC"), eingesetzt.

Mischung 1 ist das konventionelle System aus TMTD und Zinkdibutyldithiocarbamat (®Vulkacit LDB/C, Produkt der Bayer AG). Die Mischungen 2 und 3 sind erfindungsgemäße Kombinationen enthaltend Vulkanisiermittel ET-PS-3 und Beschleuniger 1) ZDBEC. Aus dem Vergleich von Mischung 1 mit den Mischungen 2 und 3 ist zu ersehen, daß mit den erfindungsgemäßen Kombinationen ein weitgehend gleiches Niveau der mechanischen Werte erreicht wird wie bei Mischung 1.

Tabelle 1

| Mischung Nr. | 1 (Vergleich) | 2 | 3 |
|---|---|---|---|
| Gew.-Teile | 0,5 TMTD<br>1,5 V.LDB/C<br>2,0 Schwefel<br>1,5 MBTS | 1,0 Et-PS-3*<br>1,5 ZDBEC<br>2,0 Schwefel<br>1,5 MBTS | 1,0 Et-PS-3*<br>3,0 ZDBEC<br>2,0 Schwefel<br>1,5 MBTS |
| Anvulk.Zeit $t_s$ (120 °C) [Min.] | 18 | 22 | 17 |
| Anvulk.Zeit $t_s$ (130 °C) [Min.] | 12,4 | 11,7 | 11,4 |
| Fließzeit $t_s$ (160 °C) [Min] | 2,5 | 2,3 | 2,0 |
| Ausvulk.Zeit $t_{90}$ (160 °C) [Min.] | 12,4 | 11,4 | 11,0 |
| Reaktionszeit $t_{90}$-$t_s$ (160 °C) [Min.] | 9,9 | 9,1 | 9,0 |
| Vulkameter Schubmodul ΔF [N] | 31 | 32 | 33 |
| Vulkanisation 20 min, 160 °C | | | |
| Zugfestigkeit F [MPa] | 10,5 | 10,6 | 10,4 |
| Bruchdehnung D [%] | 380 | 410 | 370 |
| Spannungswert M 300 % [MPa] | 9,3 | 8,8 | 9,5 |
| Härte H (Shore A) | 63 | 65 | 64 |
| Elastizität E [%] | 46 | 44 | 46 |
| Druckverformungsrest [%] | | | |
| 22 h, 70 °C | 36 | 33 | 30 |
| 70 h, 100 °C | 82 | 82 | 80 |

*) entsprechend 1,43 Gew.-Teile einer 70 gew.-%igen Mischung mit Füllstoff entsprechend 1 Gew.-Teil ET-PS-3

Die erfindungsgemäßen Mischungen 2 und 3 ergaben eine deutlich raschere Anvulkanisation bereits bei relativ niedrigen Temperaturen und eine etwas schnellere Ausvulkanisation bei einer kürzeren Reaktionszeit und einem geringfügig höheren Vulkameter-Schubmodul. Dies ist in EPDM ein sehr gewünschter Effekt, der insbesondere für die Herstellung von Extrusionsartikeln wie Profilen vorteilhaft genutzt werden kann. Die mechanischen Werte sind sehr ähnlich wie die mit der Mischung 1 erhaltenen. Auch bei den Druckverformungsresten ergeben die erfindungsgemäßen Mischungen gleiche oder zum Teil etwas günstigere Werte als die Mischung 1.

Beispiel 2

In einem Innenmischer wurde mit folgenden Bestandteilen eine Kautschukmischung ("EPDM-Batch") hergestellt:

| | Gewichtsteile |
|---|---|
| EPDM, ®Buna AP 451 | 100 |
| Ruß N 550 | 100 |
| Paraffinöl | 70 |
| Stearinsäure | 1 |
| Zinkoxid | 5 |

Auf einem Walzwerk wurden pro 276 Gew.-Teile EPDM-Batch die in Tabellen 2 und 3 angegebenen Zusätze nachgemischt.

Als Verbindungen (1) bzw. (2) wurden das oben beschriebene DBEC und

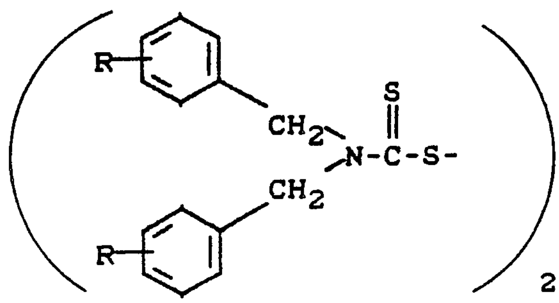

Dibenzyldithiocarbamidsäuredisulfid (nachfolgend abgekürzt: "DBET"), eingesetzt.

Tabelle 2

| (Zusammensetzung in Gew.-Teilen) | | | |
|---|---|---|---|
| Mischung Nr. | 1 (Vergleich) | 2 | 3 |
| Schwefel | 1.5 | 1.5 | 1,5 |
| 2-Mercaptobenzthiazol | 1.5 | 1,5 | 1.5 |
| ®Vulkacit LDB | 1.5 | - | - |
| TMTD | 0,7 | - | - |
| Et-PS-3 *) | - | 2 | 3 |
| ZDBEC **) | - | 0,9 | 0,9 |
| Vulkameter bei 180 °C | | | |
| $t_{10}$ [min] | 1,9 | 1.9 | 1,9 |
| $t_{70}$ [min] | 3,0 | 4.1 | 3.5 |
| $t_{90}$ [min] | 5.3 | 9.5 | 6.6 |
| $F_{max}$-$F_{min}$[N] | 42.7 | 39.8 | 42,5 |
| Physikal. Eigenschaften nach Vulkanisation (10 min 180 °C) | | | |
| Zugfestigkeit (MPa) | 10.3 | 10.9 | 10.1 |
| Bruchdehnung (%) | 285 | 259 | 260 |
| Spannungswert 100 % Dehnung (MPa) | 3.6 | 3.9 | 3,8 |
| Härte (Shore A) | 66 | 67 | 66 |
| Rückprallelastizität (%) | 45 | 45 | 46 |
| Druckverformungsrest (%) | | | |
| 22 h/100 °C | 29,1 | 26.8 | 30,5 |
| 70 h/100 °C | 45.9 | 41.1 | 43,3 |

*) Formulierung enthaltend 70 Gew.-% Et-PS-3

**) Formulierung enthaltend 80 Gew.-% ZDBEC

Tabelle 3

| (Zusammensetzung in Gew.-Teilen) | | |
|---|---|---|
| Mischung Nr. | 1 (Vergleich) | 2 |
| Schwefel | 1,5 | 1,5 |
| 2-Mercaptobenzthiazol | 1,5 | 1,5 |
| ®Vulkacit LDB | 1,5 | - |
| TMTD | 0,7 | - |
| Et-PS-3 | - | 1,43 |
| DBET | - | 0,7 |
| Vulkameter bei 160 °C | | |
| $t_{10}$ [min] | 1,8 | 1,9 |
| $t_{70}$ [min] | 5,3 | 6,2 |
| $t_{90}$ [min] | 12,6 | 13,4 |
| $F_{max}$ - $F_{min}$ [N] | 48,4 | 51,6 |
| Physikal. Eigenschaften nach Vulkanisation (15 min/160 °C) | | |
| Zugfestigkeit (MPa) | 10,0 | 10,2 |
| Bruchdehnung (%) | 283 | 280 |
| Spannungswert 100 % Dehnung (MPa) | 3,3 | 3,4 |
| Härte (Shore A) | 66 | 65 |

Beispiel 3

Auf einem Walzwerk wurden zur Kautschukmischung aus Beispiel 1 die in Tabelle 4 angeführten Dosierungen an Schwefel und Beschleunigern nachgemischt. Die Ergebnisse der durchgeführten Prüfungen sind in Tabelle 4 zusammengefaßt.

Mischung 1 ist das konventionelle System aus TMTD und dem Dithiocarbamatbeschleuniger Zinkdibutyldithiocarbamat (ZDBC). Die Mischungen 2 und 3 zeigen die erfindungsgemäßen Kombinationen aus dem Vulkanisationsmittel PS-3 und dem Beschleuniger MBTA. Aus dem Vergleich von Mischung 1 mit 2 und 3 ist zu ersehen, daß mit den erfindungsgemäßen Kombinationen ein weitgehend gleiches Niveau der mechanischen Werte erreicht wird wie bei Mischung 1.

Tabelle 4

| je 2,0 Gew.-Teile Schwefel | | | |
|---|---|---|---|
| 2,5 Gew.-Teile Zinkdibutyldithiophosphat (ZBPD) | | | |
| 1,5 Gew.-Teile MBTS | | | |
| Mischung Nr. | 1 | 2 | 3 |
| Gewichtsteile | 0.5 TMTD<br>1.0 ZDBC | 1.0 PS-3<br>2.0 MBTA | 1,5 PS-3<br>2,0 MBTA |
| Anvulk.-Zeit $t_s$ (130 ° C) [Min.]<br>Fließzeit $t_s$ (160 ° C) [Min.]<br>Ausvulk.-Zeit $t_{90}$ (160 ° C) [Min.]<br>Reaktionszeit $t_{90}$-$t_s$ (160 ° C) [Min]<br>Vulkameter-Schubmodul ΔF [N] | 8.8<br>2.3<br>11.9<br>9.6<br>33.5 | 4.6<br>1.5<br>10,9<br>9.4<br>33,6 | 4,5<br>1,5<br>10,3<br>8,8<br>35,8 |
| nach Vulkanisation (20 min 160 ° C) | | | |
| Zugfestigkeit F [MPa]<br>Bruchdehnung D [%]<br>Spannungswert 300 % [MPa]<br>Härte H (Shore A)<br>Elastizität E [%] | 11,7<br>350<br>11,0<br>67<br>47 | 10,3<br>320<br>10.5<br>65<br>47 | 10,3<br>330<br>10,5<br>66<br>47 |
| Druckverformungsrest [%] | | | |
| 22 h/ 70 ° C<br>70 h/100 ° C<br>(Heizstufe 20 Min/160 ° C) | 32,0<br>80,6 | 29,9<br>81,3 | 27,8<br>79,6 |

Die erfindungsgemäßen Mischungen 2 und 3 ergaben eine etwas raschere Anvulkanisation, was bei EPDM-Rezepturen als Vorteil zu betrachten ist. Die Ausvulkanisationszeit der erfindungsgemäßen Mischungen ist etwas günstiger, ebenso die Reaktionszeit und der Vulkameter-Schubmodul. Auch bei den Druckverformungsresten ergeben die erfindungsgemäßen Mischungen gleiche oder zum Teil etwas günstigere Werte als die Mischung 1.

Beispiel 4

In Beispiel 4 wurde mit den gleichen Mischungsbestandteilen gearbeitet wie in Beispiel 3, jedoch ohne den Zusatz des Beschleunigers Zinkdibutyldithiophosphat (ZBPD). Auch hier wird mit der Kombination von PS-3 und MBTA ein ähnliches Niveau der Vulkanisateigenschaften erreicht wie mit Mischung 1. Die erfindungsgemäße Mischung 2 gibt eine etwas schnellere Anvulkanisation und etwas schnellere Ausvulkanisation bei gleicher Reaktionszeit und einem geringfügig höheren Vulkameter-Schubmodul. Die mechanischen Werte sind sehr ähnlich wie die mit der Mischung 1 erhaltenen.

Tabelle 5

| je 2,0 Gew.-Teile Schwefel | | |
|---|---|---|
| 1,5 Gew.-Teile MBTS | | |
| Mischung Nr. | 1 | 2 |
| Gewichtsteile | 0,5 TMTD<br>1,0 ZDBC | 2,14 PS-3*)<br>1,0 MBTA |
| Anvulk.-Zeit $t_s$ (120 °C) [Min.] | 18,8 | 1 |
| Anvulk.-Zeit $t_s$ (130 °C) [Min.] | 10,6 | |
| Fließzeit $t_s$ (160 °C) [Min.] | 2,4 | 1,8 |
| Ausvulk.-Zeit $t_{90}$ (160 °C) [Min.] | 12,4 | 12,1 |
| Reaktionszeit $t_{90}$-$t_s$ (160 °C) [Min.] | 10,0 | 10,3 |
| Vulkameter Schubmodul ΔF [N] | 32 | 33 |
| nach Vulkanisation (20 min 160 °C) | | |
| Zugfestigkeit F [MPa] | 11,7 | 9,9 |
| Bruchdehnung D [%] | 380 | 360 |
| Spannungswert M 300 % [MPa] | 10,5 | 9,9 |
| Härte H (Shore A) | 65 | 65 |
| Elastizität E [%] | 47 | 46 |
| Druckverformungsrest [%] | | |
| 22 h/ 70 °C | 32 | 29 |
| 70 h/100 °C | 81 | 82 |

*) als 70 Gew.-% Mischung mit Füllstoff entsprechend 1 Gewichtsteil PS-3

Wie an den Beispielen 3 und 4 gesehen werden kann, ergibt die Kombination von PS-3 und MBTA überraschenderweise eine deutlich schnellere Anvulkanisation bereits bei relativ niedrigen Temperaturen (Beispiel 1: 130 °C), Beispiel 4 (120 und 130 °C). Dies ist in EPDM ein sehr gewünschter Effekt, da durch die rasche Anvulkanisation ein schnelles Verstrammen der Mischungen eintritt und dadurch eine Deformation, insbesondere bei Extrusionsartikeln wie Profilen, vermieden wird.

Beispiel 5

In einem Innenmischer wurde mit folgenden Bestandteilen eine Kautschukmischung hergestellt:

| | Gewichtsteile |
|---|---|
| EPDM, ®Buna AP 451[1)] | 100,0 |
| Ruß N 539 | 110,0 |
| paraffinisches Mineralöl[2)] | 70,0 |
| Stearinsäure | 1,0 |
| TMQ[x)] | 1.5 |
| Zinkoxid[4)] | 5,0 |
| Schwefel | 1.5 |

x) 2,2,4-Trimethyl-1,2-dihydrochinolin, polymer ®Vulkanox HS der Bayer AG
2) ®Ingraplast SRL der Fa. Fuchs AG, Mannheim
4) ®Zinkoxyd aktiv der Fa. Bayer AG

Tabelle 6

| je 1,5 Gew.-Teile Schwefel | | | | | |
|---|---|---|---|---|---|
| Mischung Nr. | 1 | 2 | 3 | 4 | 5 |
| Gewichtsteile | 1,5 MBTS<br>0,5 TMTD<br>1.0 ZDBC | 1,5 MBTS<br>0,5 TMTD<br>1,0 MBTA | 1,5 MBTS<br>2,0 MBTA | 1,5 MBTS<br>1,4 PS-3*)<br>1,0 MBTA | 3,5 MBTA |
| Anvulk.-Zeit $t_s$ (160° C) [Min.] | 1.9 | 1,4 | 1.9 | 1,5 | 2,1 |
| Anvulk.-Zeit $t_{10}$ (160° C) [Min.] | 1,7 | 1,3 | 1,1 | 1.4 | 1.0 |
| Ausvulk.-Zeit $t_{90}$ (160° C) [Min.] | 9,8 | 6,9 | 16,7 | 8,3 | 5.8 |
| Reaktionszeit $t_{90}$-$t_s$ (160° C) [Min.] | 7.9 | 5.5 | 14.8 | 6,8 | 3,7 |
| Vulkameter-Schubmodul ΔF[N] | 42 | 37 | 19 | 42 | 11 |
| Mischung 1 ist ein konventionelles System mit den 3 Beschleunigern MBTS. TMTD und ZDBC. In Mischung 2 wurde ZDBC durch MBTA ersetzt. Man erhält dadurch eine etwas schnellere Vulkanisation, aber niedrigeren Vernetzungsgrad als mit System 1. n System 3 wurde außer ZBDC auch TMTD durch MBTA ersetzt, was zu einem niedrigen Vulkameter-Schubmodul führt. | | | | | |

*)s. Fußnote zu Tabelle 5

Erst mit dem erfindungsgemäßen System 4, enthaltend eine Kombination von PS-3 und MBTA, erreicht man den gleichen Vernetzungsgrad wie mit System 1 - bei etwas schnellerer Anvulkanisation, günstigerer Ausvulkanisationszeit und Reaktionszeit.

Wie Mischung 5 mit MBTA allein zeigt, gelingt es mit diesem Beschleuniger allein nicht, einen hinreichenden Vernetzungsgrad zu erzielen.

Lediglich die erfindungsgemäße Kombination 4 gibt gutes Vulkanisationsverhalten ohne Risiko eines Nitrosaminproblems.

Ferner erreicht das System 4 einen Druckverformungsrest von 14 %, gemessen nach 22 h bei 70° C. Dies ist der gleiche Wert, der auch bei System 1 und 2 gefunden wird. Sowohl System 3 ergibt mit 19 % einen ungünstigeren Wert als auch System 5 mit 16 %.

## Ansprüche

1. Vulkanisierbare Massen auf Basis von C=C-doppelbindungsarmem Kautschuk, enthaltend jeweils pro 100 Gewichtsteile Kautschuk:

(I) 1 bis 2 Gewichtsteile Schwefel,

(II) 1 bis 5 Gewichtsteile Di-$C_1$-$C_6$-alkoxythiophosporyltrisulfid und

(III) 0,5 bis 5 Gewichtsteile Verbindung

1)

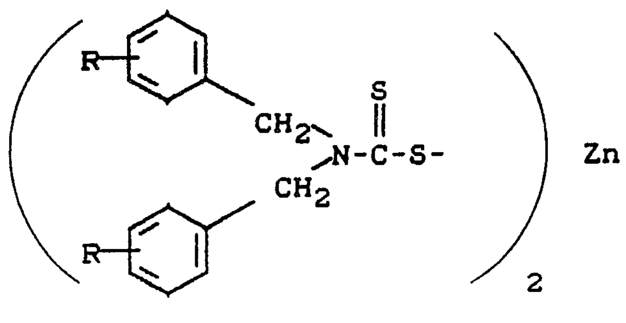

2)

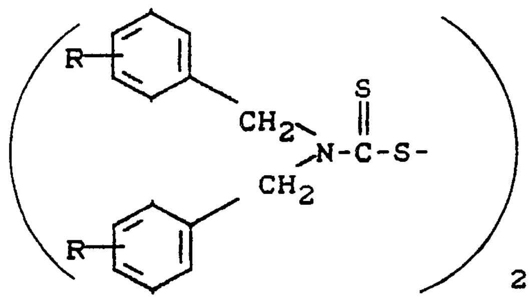

und/oder

3)

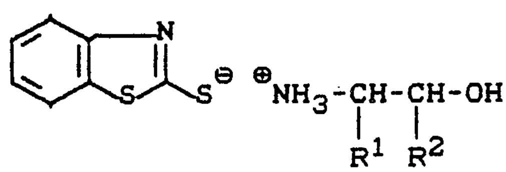

worin

R, R' und $R^2$ unabhängig voneinander Wasserstoff, $C_1$-$C_3$-Alkyl und Phenyl bedeuten.

2. Verfahren zur Herstellung der Massen nach Anspruch 1 durch Mischen der Komponenten.

3. Verwendung der Massen nach Anspruch 1 zur Herstellung von Vulkanisaten.